# EUROPÄISCHE PATENTSCHRIFT

(11) **EP 1 231 232 B1**
(45) Veröffentlichungstag und Bekanntmachung des Hinweises auf die Patenterteilung: **20.07.2005**
(21) Anmeldenummer: 02000772.0
(22) Anmeldetag: 14.01.2002
(51) Int. Cl.: C08G 18/42, C08G 18/70, C09J 175/06, C08G 18/30

(54) **Selbsttragendes reaktives Schmelzklebelement und seine Verwendung**
Self supporting reactive hotmelt adhesive element and its use
Elément adhésif réactif thermofusible autoportant et son utilisation

(30) Priorität: 12.02.2001 DE 10106630
(43) Veröffentlichungstag der Anmeldung: 14.08.2002
(73) Patentinhaber: Jowat AG, 32758 Detmold (DE)
(72) Erfinder: Terfloth, Christian, Dr., 32760 Detmold (DE); Guse, Dieter, Dr., 32584 Löhne (DE); Hippold, Theodor, 32108 Bad Salzuflen (DE)
(74) Vertreter: Gesthuysen, von Rohr & Eggert

(56) Entgegenhaltungen:
- EP-A- 0 922 720
- WO-A-93/25599
- US-A- 3 951 919

## Beschreibung

Die vorliegende Erfindung betrifft ein selbsttragendes reaktives Schmelzklebeelement, das einen Einkomponenten-Schmelzklebstoff umfaßt, ein Verfahren zu seiner Herstellung sowie seine Verwendung. Des weiteren betrifft die vorliegende Erfindung ein Klebeverfahren zum dauerhaften Verbinden von Fügeteilen.

Schmelzklebstoffe gibt es in einer großen Vielzahl. Sie sind insbesondere bei industriellen Anwendungen regelmäßig auf spezielle Applikationen nach Vorgabe durch den Anwender abgestimmt.

So ist es in der holzverarbeitenden Industrie, insbesondere in der Möbelindustrie, bekannt, beispielsweise Faserplatten mit einer Beschichtung, wie z. B. einem Furnier oder einem Laminat, durch Aufkleben zu versehen, wobei insbesondere thermoplastische Schmelzkleber oder feuchtigkeitsreaktive Polyurethan-Schmelzkleber zur Anwendung kommen.

Bei einer Vielzahl von Anwendungen ist jedoch der Einsatz von themioplastischen Schmelzklebern nicht unproblematisch, weil diese Schmelzkleber eine geringe Feuchtigkeits- und Wärmestandfestigkeit aufweisen. Diesbezüglich zeigen feuchtigkeitsreaktive Polyurethan-Schmelzkleber deutliche Verbesserungen.

Feuchtigkeitsreaktive Polyurethan-Schmelzkleber haben jedoch den Nachteil, daß sie nur in aufwendiger Verpackung, insbesondere unter Ausschluß von Luftfeuchtigkeit, gelagert werden können und nach Öffnen der Verpackung rasch verarbeitet werden müssen.

Beim Einsatz von Zweikomponenten-Klebstoffsystemen besteht dagegen der Nachteil, daß diese vor ihrer Verwendung zunächst gemischt und dann rasch verarbeitet werden müssen. Hier besteht insbesondere die Gefahr von Dosierfehlern.

Bei dem Einsatz von Schmelzklebern besteht insbesondere der Nachteil, daß zum Teil sehr aufwendige Aufschmelz- und Auftragsvorrichtungen erforderlich sind, deren Handhabung und Reinigung mit erheblichem Zeit- und Arbeitsaufwand verbunden sind.

Zum Verkleben von Gegenständen kommen daher regelmäßig auch Klebebänder zum Einsatz. Diese haben jedoch den Nachteil, daß sie keinen so stabilen Haftverbund wie reaktive Schmelzklebstoffe ausbilden und zum anderen stets auf einem Trägerelement aufgebracht sind, von dem sie vor der Anwendung getrennt werden müssen.

Die WO 99/19413 beschreibt eine Packung für ein solches herkömmliches, einen Träger aufweisendes Klebeband, wobei das Trägerelement in Blatt- oder Bandform eine Klebstoffschicht, insbesondere eine Schmelzkleberschicht, aufweist und die Klebebandpackung voneinander getrennte Bandabschnitte aufweist, deren aneinandergrenzende Ränder durch Einschnitte gebildet sind, welche das Trägerelement, nicht aber die Kleberschicht durchtrennen. Auch bei diesem Klebeband besteht ein wesentlicher Nachteil darin, daß es vor der Anwendung zunächst von dem Träger entfernt werden muß.

Weiterhin betrifft die WO 93/25599 reaktive Schmelzmassen, wobei isocyanatreaktive Polymere, Di- oder Polyisocyanate, Desaktivierungsmittel für die Isocyanate sowie gegebenenfalls weitere Substanzen zu einer lagerstabilen und hitzehärtbaren Stoffmischung verarbeitet werden, wobei die resultierende Stoffinischung abwechselnd Teilbereiche aufweist, in denen das Verhältnis von isocyanatreaktivem Polymer zu Isocyanat größer oder kleiner ist als das durchschnittliche Verhältnis dieser Stoffe in der gesamten Stoffmischung.

Die US-A-3 951 919 betrifft eine nichtreaktive Klebstoffzusammensetzung auf Basis eines bereits ausreagierten bzw. auspolymerisierten Polyurethans, welches durch Reaktion von Diisocyanaten mit im wesentlichen linearen isocyanatreaktiven Polyestern mit Hydroxylgruppen gebildet ist und im Bereich der Schuhherstellung, insbesondere zum Verkleben der Schuhsohle, eingesetzt wird.

Vor diesem technischen Hintergrund besteht nunmehr die Aufgabe der vorliegenden Erfindung darin, ein reaktives Schmelzklebematerial zur Verfügung zu stellen, das ohne ein Trägerelement auskommt.

Eine weitere Aufgabe der vorliegenden Erfindung besteht in der Bereitstellung eines reaktiven Schmelzklebematerials, das problemlos lagerbar und weiterverarbeitbar ist und dabei ausgezeichnete Klebeeigenschaften aufweist. Insbesondere soll ein derartiges reaktives Schmelzklebematerial ohne aufwendige Aufschmelz- und/oder Auftragsvorrichtungen verwendet werden können.

Eine weitere Aufgabe der vorliegenden Erfindung besteht darin, ein reaktives Schmelzklebeelement bereitzustellen, das insbesondere eine große Feuchtigkeits- und Wärmestandfestigkeit aufweist.

Das der Erfindung zugrunde liegende Problem wird erfindungsgemäß durch ein selbsttragendes reaktives Schmelzklebeelement nach Anspruch 1 in Form eines bei Raumtemperatur festen, reaktiven Einkomponenten-Schmelzklebstoffs gelöst, wobei der bei Raumtemperatur feste, reaktive Einkomponenten-Schmelzklebstoff
(a) 0,5 bis 30 Gew.-%, bezogen auf das reaktive Schmelzklebeelement, mindestens eines bei Raumtemperatur festen oder flüssigen Isocyanats,
(b) 20 bis 90 Gew.%, bezogen auf das reaktive Schmelzklebeelement, mindestens eines bei Raumtemperatur festen isocyanatreaktiven Polymers und/oder Harzes,
(c) bis zu 60 Gew.-%, bezogen auf das reaktive Schmelzklebeelement, eines nichtisocyanatreaktiven Polymers, Wachses und/oder Harzes
umfaßt, wobei die nichtisocyanatreaktiven Polymere, Wachse und/oder Harze (c) zusammen mit den isocyanatreaktiven Polymeren und/oder Harzen (b) eine Matrix ausbilden, in welche die Isocyanate (a) in homogener Verteilung eingelagert sind, und wobei der Gehalt an freien NCO-Gruppen im reaktiven Schmelzklebeelement mindestens 0,5 Gew.-%, bezogen auf das reaktive Schmelzklebeelement, beträgt.

Wie zuvor angeführt, bildet dabei das isocyanatreaktive Polymer und/oder Harz (b) zusammen mit dem nichtisocyanatreaktiven Polymer, Wachs und/oder Harz (c) eine bei Raumtemperatur feste Matrix aus, in welche die Isocyanate (a) in homogener Verteilung eingebettet sind. Mit anderen Worten sind die Isocyanate homogen über die reaktive Polymer- und/oder Harzmatrix verteilt.

Überraschenderweise hat es sich gezeigt, daß die bei Raumtemperatur festen oder flüssigen Isocyanate, wenn sie homogen eingebettet in die reaktive Matrix sind, bei Raumtemperatur eine so geringe Reaktivität gegenüber den isocyanatreaktiven funktionellen Gruppen der Polymer- und/oder Harzmatrix, insbesondere gegenüber Hydroxylgruppen und auch Wasser, zeigen, daß man beispielsweise die frisch angesetzte Klebstoffschmelze unter Wasser zu Granulat verarbeiten kann.

Als bei Raumtemperatur feste oder flüssige Isocyanate können gemäß der vorliegenden Erfindung aliphatische und/oder aromatische, di- und/oder polyfunktionelle Isocyanate eingesetzt werden, insbesondere solche mit freien endständigen Isocyanatgruppen (NCO-Gruppen).

Beispiele für erfindungsgemäß geeignete Isocyanate sind Diisocyanatodiphenylmethane (MDIs), insbesondere 4,4'-Diisocyanatodiphenylmethan und 2,4'-Diisocyanatodiphenylmethan, sowie Mischungen verschiedener Diisocyanatodiphenylmethane; 1,5-Diisocyanatonaphthalin (NDI); Diisocyanatotoluole (TDIs), insbesondere 2,4-Diisocyanatotoluol, sowie TDI-Urethdione, insbesondere dimeres 1-Methyl-2,4-phenylen-diisocyanat (TDI-U), und TDI-Hamstoffe, 1-Isocyanato-3-isocyanatomethyl-3,5,5-trimethylcyclohexan (IPDI) und dessen Isomere und Derivate, insbesondere Di-, Tri- und Polymerisate, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); sowie Mischungen und Prepolymere der zuvor genannten Verbindungen.

Erfindungsgemäß besonders bevorzugt als Isocyanatkomponente ist ein Gemisch aus 4,4'-Diisocyanatodiphenylmethan und 2,4'-Diisocyanatodiphenylmethan, vorzugsweise mit einem Gehalt an 2,4'-Diisocyanatodiphenylmethan von mehr als 20 Gew.-%, insbesondere mehr als 30 Gew.-%, bevorzugt mehr als 40 Gew.-%, ganz besonders bevorzugt mehr als 50 Gew.-%, bezogen auf das Isocyanatgemisch.

Die Verwendung von 2,4'-Diisocyanatodiphenylmethan hat den Vorteil, daß die in 2-Position befindliche NCO-Gruppe - im Gegensatz zu der NCO-Gruppe in 4'-Position - relativ reaktionsträge und folglich in dem erfindungsgemäßen reaktiven Schmelzklebeelement über einen längeren Zeitraum stabil vorhanden ist.

Ein Beispiel für ein erfindungsgemäß geeignetes Gemisch aus 4,4'-Diisocyanatodiphenylmethan und 2,4'-Diisocyanatodiphenylmethan ist das von der Bayer AG unter der Bezeichnung Desmodur® VP KA 8616 vertriebene, bei Raumtemperatur flüssige Produktgemisch.

Die Verwendung von wie zuvor definierten Gemischen aus 4,4'-Diisocyanatodiphenylmethan und 2,4'-Diisocyanatodiphenylmethan in dem erfindungsgemäßen reaktiven Schmelzklebeelement führt zu einem Produkt, das bereits bei Raumtemperatur unter Feuchtigkeitseinwirkung vernetzt, wobei der Vernetzungsvorgang durch Wärmeeinwirkung aktiviert bzw. beschleunigt wird und die Wärmeeinwirkung für Adhäsionsvorgänge (Hitzeklebrigkeit) erforderlich ist. Es resultieren erfindungsgemäße Produkte (= reaktive Schmelzklebeelemente) mit geringerer Reaktivität und höherer Selektivität.

Gemäß einer besonderen Ausführungsform der vorliegenden Erfindung kann als Isocyanat ein maskiertes oder blockiertes Isocyanat verwendet werden, welches insbesondere unter Wärme- und/oder Feuchtigkeitseinwirkung die blockierenden oder maskierenden Gruppen abspaltet. Blockierte oder maskierte Isocyanate dieser Art sind dem Fachmann aus dem Stand der Technik bekannt. Erfindungsgemäß geeignete blockierte oder maskierte Isocyanate wird er je nach Anwendung entsprechend auswählen.

Gemäß einer weiteren, besonderen Ausführungsform der vorliegenden Erfindung kann als Isocyanat ein sogenanntes verkapseltes oder oberflächendesaktiviertes Isocyanat verwendet werden, d. h. ein Isocyanat mit retardierter Reaktivität.

Verkapselte oder oberflächendesaktivierte Isocyanate sind dem Fachmann aus dem Stand der Technik geläufig. Beispielsweise kann verwiesen werden auf die EP 0 204 970 A2 bzw. die entsprechende US-A-4 888 124, die WO 99/58590 bzw. die entsprechende DE 198 20 270 oder aber auf die EP 0 922 720 A1. Die Oberflächendesaktivierung kann beispielsweise durch Dispersion eines pulverförmigen, festen Isocyanats in einer Lösung des Desaktivierungsmittels, durch Eintragen einer Schmelze eines niederschmelzenden Isocyanats in eine Lösung des Desaktivierungsmittels in einem nichtlösenden flüssigen Dispersionsmittel oder aber durch Zugabe des Desaktivierungsmittels oder einer Lösung des Desaktivierungsmittels zu einer Dispersion der festen feinteiligen Isocyanate oder umgekehrt erfolgen. Als Desaktivierungsmittel werden insbesondere Verbindungen mit hydrophilen Gruppen wie insbesondere Aminogruppen oder Hydroxylgruppen verwendet, die mit freien Isocyanatgruppen des Isocyanats reagieren können und somit eine Art Oberflächenhülle auf den Isocyanaten ausbilden, welche die Isocyanate zunächst desaktiviert (z. B. Amine, Diamine, Polyamine, Alkohole, Diole, Polyole oder die entsprechenden Thioverbindungen).

Insbesondere wird im Rahmen der vorliegenden Erfindung das Desaktivierungsmittel in Art und Menge derart ausgewählt, daß die Verkapselung oder Oberflächendesaktivierung vorzugsweise bei Temperaturen oberhalb der Raumtemperatur, insbesondere bei Temperaturen zwischen 60 °C und 160 °C, aufgebrochen wird.

Wie zuvor beschrieben, werden für die Herstellung des erfindungsgemäßen reaktiven Schmelzklebeelementes die Isocyanate in Mengen von 0,5 bis 30 Gew.-%, bezogen auf das reaktive Schmelzklebeelement, eingesetzt.

Der Gehalt an freien NCO-Gruppen im erfindungsgemäßen reaktiven Schmelzelement beträgt, bezogen auf das reaktive Schmelzklebeelement, mindestens 0,5 Gew.-%, insbesondere mindestens 1 Gew.-%, vorzugsweise mindestens 1,5 Gew.-%, ganz besonders bevorzugt mindestens 2 Gew.-%.

Das isocyanatreaktive Polymer und/oder Harz ist insbesondere derart ausgewählt, daß es mindestens zwei gegenüber Isocyanaten reaktive funktionelle Gruppen pro Molekül aufweist, insbesondere Hydroxyl-, Amino-, Carboxyl- und/oder Carbonamidgruppen.

Insbesondere ist das reaktive Polymer und/oder Harz derart ausgewählt, daß es mindestens zwei gegenüber Isocyanaten reaktive H-Atome je Molekül aufweist.

Als besonders vorteilhaft hat es sich erwiesen, wenn das isocyanatreaktive Polymer und/oder Harz ein mittleres Molekulargewicht von mehr als 8.000 g/mol, insbesondere von 10.000 bis 50.000 g/mol, vorzugsweise von 10.000 bis 30.000 g/mol, aufweist.

Bei dem isocyanatreaktiven Polymer handelt es sich im allgemeinen um ein thermoplastisches Polymer, d. h. um ein Polymer, das unterhalb der Temperatur, bei welcher es dann mit dem Isocyanat vernetzt, thermoplastisch ist.

Beispiele für erfindungsgemäß geeignete isocyanatreaktive Polymere und/oder Harze sind Polyester, Polycaprolactonpolyester, Polyether, Polyurethane, Polyamide, Polytetrahydrofurane, Polyacrylate und Polymethacrylate sowie deren Copolymere und Mischungen, insbesondere mit jeweils mindestens zwei isocyanatreaktiven funktionellen Gruppen pro Molekül.

Wie zuvor beschrieben, beträgt der Gehalt an isocyanatreaktivem Polymer und/oder Harz, bezogen auf das reaktive Schmelzklebeelement, 20 bis 90 Gew.-%.

Wie zuvor erwähnt, ist das Isocyanat (a) homogen in der Matrix aus isocyanatreaktivem Polymer und/oder Harz (b) und nichtisocyanatreaktivem Polymer, Wachs und/oder Harz (c) verteilt, insbesondere durch Einbettung des Isocyanats (a) in die Matrix aus isocyanatreaktivem Polymer und/oder Harz (b) und nichtisocyanatreaktivem Polymer, Wachs und/oder Harz (c).

Des weiteren ist es vorteilhaft, wenn der Einkomponenten-Schmelzklebstoff des erfindungsgemäßen selbsttragenden reaktiven Schmelzklebeelementes darüber hinaus mindestens einen Katalysator enthält. Vorzugsweise ist dieser Katalysator homogen über die Matrix aus isocyanatreaktivem Polymer und/oder Harz (b) und nichtisocyanatreaktivem Polymer, Wachs und/oder Harz (c) verteilt bzw. hierin eingebettet.

Als erfindungsgemäß geeignete Katalysatoren können Katalysatoren verwendet werden, wie sie aus der Polyurethanchemie gängig und bekannt sind, insbesondere organische Zinnverbindungen, wie z. B. Dibutylzinndilaurat (DBTL), oder Alkylmercaptidverbindungen des Dibutylzinns oder aber organische Eisen-, Blei-, Cobalt-, Wismuth-, Antimon-, Zinkverbindungen und deren Mischungen oder aber Katalysatoren auf Aminbasis ("Aminkatalysatoren") wie beispielsweise tertiäre Amine oder DABCO (1,4-Diazabicyclo-[2.2.2]octan, Triethylendiamin, TEDA) oder auch DMDEE (Dimorpholinodiethylether).

Im allgemeinen beträgt der Gehalt an Katalysator, bezogen auf das erfindungsgemäße reaktive Schmelzklebeelement, bis zu 5 Gew.-%; insbesondere liegt er zwischen 0,01 und 5 Gew.%.

Wie zuvor beschrieben, umfaßt das erfindungsgemäße reaktive Schmelzklebeelement außerdem nichtreaktive, d. h. nichtisocyanatreaktive Polymere, Wachse und/ oder Harze. Diese sind vorzugsweise ebenfalls homogen in der Matrix aus isocyanatreaktivem Polymer und/oder Harz (b) und nichtisocyanatreaktivem Polymer, Wachs und/oder Harz (c) verteilt.

Erfindungsgemäß geeignete, nichtisocyanatreaktive Polymere, Wachse und/oder Harze sind beispielsweise aliphatische, cyclische oder cycloaliphatische Kohlenwasserstoffharze, Terpenphenolharze, Cumaron-Indenharze, α-Methylstyrolharze, polymerisierte Tallharzester oder Ketonaldehydharze. Dabei sind insbesondere Harze mit niedrigen Säurezahlen, vorzugsweise mit Werten kleiner als 1 mg KOH/g, bevorzugt.

Als nichtisocyanatreaktive Polymere können erfindungsgemäß beispielsweise auch Ethylen/Vinylacetat-Polymere oder -Copolymere verwendet werden, insbesondere solche mit Vinylacetat-Gehalten zwischen 12 und 40 Gew.-%, vorzugsweise 18 bis 28 Gew.-%, bezogen auf das Polymer oder Copolymer, und/oder mit Schmelzindices (MFIs, DIN 53735) von 8 bis 800, vorzugsweise von 150 bis 500.

Als nichtisocyanatreaktive Polymere können aber auch Polyolefine verwendet werden, insbesondere mit mittleren Molekulargewichten von 5.000 bis 25.000 g/mol, vorzugsweise 10.000 bis 20.000 g/mol, und/oder mit Erweichungsbereichen nach Ring und Kugel zwischen 80 und 170 °C, vorzugsweise zwischen 80 und 130 °C.

Als nichtisocyanatreaktive Polymere können erfindungsgemäß beispielsweise auch (Meth-)acrylate wie Styrol(meth)acrylate verwendet werden.

Als nichtisocyanatreaktive Wachse können erfindungsgemäß beispielsweise Polyolefinwachse, insbesondere Polyethylen- und Polypropylenwachse, sowie auf dieser Basis modifizierte Wachse verwendet werden.

Wie zuvor ausgeführt, bilden die nichtisocyanatreaktiven Polymere, Wachse und/oder Harze zusammen mit den isocyanatreaktiven Polymeren und/oder Harzen eine Matrix aus, in welche die Isocyanate und gegebenenfalls die anderen Bestandteile des erfindungsgemäßen reaktiven Schmelzklebeelementes - vorzugsweise in homogener Verteilung - eingebettet bzw. eingelagert sind. Mit anderen Worten bilden die nichtisocyanatreaktiven Polymere, Wachse und/oder Harze einerseits und die isocyanatreaktiven Polymere und/oder Harze andererseits gemeinsam eine Matrix für die übrigen Bestandteile (Inhaltsstoffe) des erfindungsgemäßen reaktiven Schmelzklebeelementes aus.

Der Gehalt an nichtisocyanatreaktiven Polymeren, Wachsen und/oder Harzen kann, bezogen auf das reaktive Schmelzklebeelement, bis zu 60 Gew.-% betragen.

Des weiteren besteht die Möglichkeit, daß das erfindungsgemäße reaktive Schmelzklebeelement weiterhin mindestens ein isocyanatreaktives monofunktionelles Additiv enthält.

Erfindungsgemäß geeignete monofunktionelle Additive sind beispielsweise monofunktionelle Amine, Alkohole oder Mercaptane oder andere monofunktionelle Additive mit einer isocyanatreaktiven funktionellen Gruppe.

Der Gehalt an isocyanatreaktiven monofunktionellen Additiven kann, bezogen auf das reaktive Schmelzklebeelement, bis zu 20 Gew.-% betragen.

Weiterhin besteht die Möglichkeit, daß das erfindungsgemäße reaktive Schmelzklebeelement außerdem Additive zur Verbesserung der Wärmeleitfähigkeit und/oder der Empfindlichkeit für Strahlungsinduktion, insbesondere gegenüber Mikrowellen- und Hochfrequenzstrahlung, enthält. Dies hat den Vorteil, daß bei dem wärmeinduzierten Vernetzungsvorgang, beispielsweise durch Mikrowellen- oder Hochfrequenzbestrahlung, der Energieeintrag besonders effizient genutzt werden kann.

Erfindungsgemäß geeignete Additive zur Verbesserung der Wärmeleitfähigkeit und/oder der Empfindlichkeit für Strahlungsinduktion, insbesondere gegenüber Mikrowellen- und Hochfrequenzstrahlung, sind beispielsweise Metalle in Pulverform, insbesondere Silber, oder wärmeleitfähige Polymere wie Polyanilin oder Graphit bzw. Ruße.

Der Gehalt an Additiven zur Verbesserung der Wärmeleitfähigkeit und/oder der Empfindlichkeit für Strahlungsinduktion, insbesondere gegenüber Mikrowellen- und Hochfrequenzstrahlung, kann, bezogen auf das reaktive Schmelzklebeelement, bis zu 25 Gew.-% betragen und liegt im allgemeinen zwischen etwa 1 und etwa 25 Gew.-%, vorzugsweise zwischen etwa 5 und etwa 20 Gew.-%.

Darüber hinaus kann das erfindungsgemäße reaktive Schmelzklebeelement außerdem übliche Additive und Zusatzstoffe enthalten, wie beispielsweise Weichmacher oder zur Plastifizierung behilfliche Additive, Öle, Antioxidantien, Alterungsschutzmittel, Säurefänger, Füllstoffe, optische Aufheller, Farbstoffe, Farbpigmente etc.

Wie zuvor erläutert, sind die einzelnen Bestandteile (Inhaltsstoffe) des erfindungsgemäßen reaktiven Schmelzklebeelementes vorzugsweise in homogener Verteilung ineinander eingebettet.

Ein Vorteil der vorliegenden Erfindung liegt darin, daß das erfindungsgemäße reaktive Schmelzklebeelement selbsttragend ist. Daher bedarf es keines Trägerelementes, was insbesondere die Anwendung in einem Klebeverfahren erleichtert. Der selbsttragende Charakter des erfindungsgemäßen reaktiven Schmelzklebeelementes kommt dadurch zustande, daß es aus einem wie zuvor beschriebenen, bei Raumtemperatur festen, reaktiven Einkomponenten-Schmelzklebstoff besteht. Dennoch ist es nicht ausgeschlossen, daß das erfindungsgemäße reaktive Schmelzklebeelement auf einem geeigneten Träger (z. B. aus silikonisiertem Papier) aufgebracht wird.

Unter dem Begriff "Raumtemperatur" wird erfindungsgemäß insbesondere eine Temperatur von 20 °C bei Normaldruck und bei einer relativen Luftfeuchtigkeit von 65 % verstanden.

Ein weiterer Vorteil der vorliegenden Erfindung liegt darin, daß das erfindungsgemäße reaktive Schmelzklebeelement bei Raumtemperatur nichtklebend bzw. nichthaftend ausgebildet ist und erst bei Temperaturen oberhalb der Raumtemperatur, vorzugsweise bei Temperaturen von 60 °C bis 160 °C, klebrig bzw. haftend wird. Mit anderen Worten ist das erfindungsgemäße reaktive Schmelzklebeelement bei Raumtemperatur nicht oberflächenklebrig, sondern wärme- bzw. hitzeklebrig. Aufgrund dieser Eigenschaften des erfindungsgemäßen reaktiven Schmelzklebeelementes bedarf es keiner zusätzlichen Abdeckschicht oder abziehbaren Trennschicht zur Abdeckung einer Klebeschicht (= klebrigen bzw. klebenden Schicht), d. h. das erfindungsgemäße reaktive Schmelzklebeelement kann beim Verkleben so, wie es ist, eingesetzt werden, ohne daß vor der Anwendung ein Trägerelement oder ein Abziehpapier entfernt werden müßte.

Das erfindungsgemäße reaktive Schmelzklebeelement beginnt im allgemeinen nach kurzzeitigem Erwärmen oberhalb der Raumtemperatur, insbesondere auf Temperaturen von 60 °C bis 160 °C, zu vernetzen und somit einen stabilen Klebeverbund bzw. dauerhaften Haftverbund zwischen den zusammengefügten Gegenständen auszubilden.

Bei der Verwendung flüssiger Isocyanate oder Isocyanatgemische setzt die Vernetzung des erfindungsgemäßen reaktiven Schmelzklebeelementes im allgemeinen bereits bei Temperaturen von etwa 60 °C ein, während bei der Verwendung fester Isocyanate oder Isocyanatgemische die Vernetzung bei höheren Temperaturen, d. h. im allgemeinen ab etwa 100 °C einsetzt.

Zur Vernetzung werden die einzelnen Inhaltsstoffe des erfindungsgemäßen reaktiven Schmelzklebeelements im allgemeinen miteinander verschmolzen. Unter dem Begriff "Verschmelzen" ist erfindungsgemäß insbesondere gemeint, daß die Inhaltsstoffe in einen viskosen bzw. fließfähigen Zustand überführt werden.

Im Falle der festen Isocyanat(gemisch)e müssen für den Klebevorgang sowohl die Isocyanate als auch die feste Matrix und gegebenenfalls die übrigen Bestandteile aufgeschmolzen werden, während im Falle der flüssigen Isocyanat(gemisch)e nur die Matrix und gegebenenfalls die übrigen Bestandteile aufgeschmolzen werden müssen.

Die Dauer der Vernetzung beträgt, insbesondere im Falle der festen Isocyanat(gemisch)e, bei Temperaturen von 100 °C bis 160 °C im allgemeinen weniger als 10 Minuten, insbesondere weniger als 5 Minuten.

Bei initiiertem Vernetzungsvorgang durch Erhitzen auf Temperaturen oberhalb der Raumtemperatur, insbesondere 100 °C bis 160 °C, gefolgt von einem sofortigen Abkühlen auf Raumtemperatur, beträgt die Dauer der Vernetzung, insbesondere im Falle der festen Isocyanat(gemisch)e, bei Raumtemperatur dagegen im allgemeinen etwa 5 bis etwa 8 Tage.

Das erfindungsgemäße reaktive Schmelzklebeelement ist, wie zuvor erläutert, insbesondere wärme- und/oder feuchtigkeitsvernetzend ausgebildet.

Wie zuvor beschrieben, hat sich überraschenderweise gezeigt, daß die festen oder flüssigen Isocyanate, eingebettet in die reaktive Matrix aus isocyanatreaktivem Polymer und/oder Harz (b) und nichtisocyanatreaktivem Polymer, Wachs und/oder Harz (c), bei Raumtemperatur eine so geringe Reaktivität aufweisen, daß das erfindungsgemäße reaktive Schmelzklebeelement ohne weiteres gelagert werden kann. Bei Raumtemperatur und bei 65 % relativer Luftfeuchtigkeit ist das erfindungsgemäße reaktive Schmelzklebeelement mindestens 1 Monat, insbesondere mindestens 2 Monate, vorzugsweise mindestens 3 Monate, lagerstabil. Lagerstabil meint insbesondere, daß der Erweichungsbereich (Kofler-Bank) des erfindungsgemäßen Schmelzklebeelements über den angegebenen Zeitraum konstant bleibt, was darauf schließen läßt, daß keine bzw. im wesentlichen keine Vernetzung stattgefunden hat.

Das erfindungsgemäße reaktive Schmelzklebeelement kann je nach Anwendung als Folie, Film, Streifen oder reaktives "Klebeband" ausgebildet sein. Insbesondere kann es zu einer Rolle aufgewickelt werden. In diesem Fall ist es vorteilhaft, das zur Rolle aufgewickelte reaktive Schmelzklebeelement in einer Kassette zu lagern, insbesondere um den Kontakt mit Feuchtigkeit bzw. Wasser zu verhindern und somit die Lagerstabilität noch weiter zu verbessern.

Die Schichtdicke des erfindungsgemäßen reaktiven Schmelzklebeelements liegt im allgemeinen im Bereich zwischen 10 µm und 1.000 µm, insbesondere zwischen 50 µm und 500 µm, vorzugsweise im Bereich zwischen 100 µm und 300 µm.

Das erfindungsgemäße reaktive Schmelzklebeelement weist im allgemeinen eine gewisse Dehnfähigkeit (Elastizität) - vorzugsweise sowohl in Längs- als auch in Querrichtung - aus. Darüber hinaus ist es bei den zuvor angegeben Dicken flexibel. Diese Eigenschaften erleichtern die Handhabbarkeit bei der Anwendung.

Gemäß einer besonderen Ausführungsform enthält das erfindungsgemäße reaktive Schmelzklebeelement die folgenden Inhaltsstoffe in homogener Verteilung in den angegebenen Gewichtsanteilen, die sich jeweils auf das reaktive Schmelzklebeelement beziehen:
- Isocyanate, wie zuvor definiert, in einer Menge von 0,5 bis 30 Gew.-%,
- isocyanatreaktive Polymere und/oder Harze, wie zuvor definiert, in einer Menge von 20 bis 90 Gew.-%,
- gegebenenfalls isocyanatreaktive monofunktionelle Additive, wie zuvor definiert, in Mengen von bis zu 20 Gew.-%,
- nichtisocyanatreaktive Polymere, Wachse und/oder Harze, wie zuvor definiert, in Mengen von bis zu 60 Gew.-%,
- gegebenenfalls Katalysatoren, wie zuvor definiert, in einer Menge von bis zu 5 Gew.-%, insbesondere 0,01 bis 5 Gew.-%,
- gegebenenfalls Additive zur Verbesserung der Wärmeleitfähigkeit und/oder der Empfindlichkeit für Strahlungsinduktion, wie zuvor definiert, in einer Menge von bis zu 25 Gew.-%, insbesondere 1 bis 25 Gew.-%, vorzugsweise 5 bis 20 Gew.-%
- gegebenenfalls übliche Additive und Zusatzstoffe, wie zuvor definiert.

Weiterer Gegenstand der vorliegenden Erfindung ist ein Verfahren zur Herstellung des erfindungsgemäßen reaktiven Schmelzklebeelementes, das durch die folgenden Verfahrensschritte gekennzeichnet ist:
- Mischen der einzelnen Bestandteile (Inhaltsstoffe), wie zuvor definiert, insbesondere unter leichtem Erwärmen, jedoch ohne daß im Falle der festen Isocyanate eine (nennenswerte) Reaktion der einzelnen Bestandteile (Inhaltsstoffe) untereinander stattfindet,
- gegebenenfalls Abkühlen- und/oder Erstarrenlassen der resultierenden Mischung,
- Verarbeitung der auf diese Weise hergestellten homogene Masse (= reaktiver Einkomponenten-Schmelzklebstoff) zu einem Film, gegebenenfalls unter leichtem Erwärmen oberhalb der Raumtemperatur, jedoch ohne daß eine (nennenswerte) Reaktion der einzelnen Bestandteile (Inhaltsstoffe) untereinander stattfindet,
- gegebenenfalls Abkühlenlassen der so erhaltenen Filme auf Raumtemperatur und schließlich
- gegebenenfalls Weiterverarbeitung, insbesondere Dimensionierung (z. B. zu Folien, kleineren Stücken etc.) und/oder Aufwickeln zu Rollen.

Das Mischen der einzelnen Bestandteile (Inhaltsstoffe) des erfindungsgemäßen reaktiven Schmelzklebeelementes kann beispielsweise in einem Extruder erfolgen. Alternativ kann jedoch auch ein herkömmlicher Mischer verwendet werden.

Die Verarbeitung zu Filmen kann mit gängigen, dem Fachmann geläufigen Methoden erfolgen. Beispielsweise kann die Mischung der einzelnen Bestandteile (Inhaltsstoffe) durch eine Schlitzdüse gepreßt werden. Weiterhin ist es z. B. auch möglich, die Masse aufzurakeln und anschließend gegebenenfalls zu walzen und/oder zu recken.

Das erfindungsgemäße reaktive Schmelzklebeelement kann insbesondere dazu verwendet werden, um Gegenstände aller Art miteinander zu verkleben bzw. dauerhaft klebend miteinander zu verbinden. Mit anderen Worten läßt sich das erfindungsgemäße reaktive Schmelzklebeelement insbesondere in einem Klebeverfahren, vorzugsweise einem Schmelzklebeverfahren, einsetzen (z. B. zum dauerhaften Zusammenfügen bzw. Verkleben von Fügeteilen beliebiger Art, insbesondere aus Holz und/oder Kunststoff). Für eine Vernetzung werden die einzelnen Bestandteile (Inhaltsstoffe) des erfindungsgemäßen reaktiven Schmelzklebeelementes im allgemeinen aufgeschmolzen bzw. verschmolzen.

Bei der Verklebung, insbesondere unter einem Anpreßdruck, erfolgt ein Vermischen der einzelnen aufgeschmolzenen bzw. fließfähigen Bestandteile (Inhaltsstoffe) des erfindungsgemäßen reaktiven Schmelzklebeelementes, wodurch die Vernetzung durch ein Kontaktieren der Isocyanate und der isocyanatreaktiven Polymere und/oder Harze und gegebenenfalls des Katalysators eingeleitet wird.

So kann beispielsweise ein z. B. als reaktives "Klebstoffband" ausgebildetes, erfindungsgemäßes reaktives Schmelzklebeelement zum Verkleben eines Umleimers an einer Spanplatte in der holzverarbeitenden Industrie eingesetzt werden. Von Vorteil ist dabei die hohe Wärmestandfestigkeit und die Beständigkeit gegen Feuchte des erfindungsgemäßen reaktiven Schmelzklebeelementes, wobei jedoch keine aufwendige Verpackung erforderlich ist. Vorteilhaft ist weiter, daß nur soviel Klebstoff aufgeschmolzen werden muß, wie gerade auch benötigt wird. Aufwendige Aufschmelz- und Auftragsapparaturen werden nicht benötigt; folglich entfällt auch ein aufwendiges Reinigen von Vorschmelzgeräten, wie es im Stand der Technik erforderlich ist, zumal Schmelzklebstoffe aufgrund der ständigen Temperaturbelastung auch zum Verbrennen neigen.

Im allgemeinen hat sich bei dem erfindungsgemäßen reaktiven Schmelzklebeelement auf Schmelzkleberbasis bewährt, wenn dieses während und/oder nach Auslösung der Vernetzung unter Druck gesetzt wird. Feste, dauerhafte und schnelle Klebverbindungen sind so gewährleistet. Eine solche Druckbelastung führt zu einer intensiven Vermischung der Bestandteile (Inhaltsstoffe) und damit zu einer gleichmäßigen Vernetzung insbesondere dann, wenn die Druckbelastung eine wechselnde ist, beispielsweise eine walkartige Druckbelastung eines bandartig ausgebildeten reaktiven Schmelzklebeelementes nach der Erfindung bei einem Durchlaufen mehrerer Andruckrollen.

Wie zuvor beschrieben, erfolgt eine Vernetzung vorzugsweise bei Temperaturen von etwa 60 °C bis 160 °C. Ein sicheres Aufschmelzen der einzelnen Bestandteile (Inhaltsstoffe) und damit die Auslösung der Vernetzung wird insbesondere durch den Einsatz eines Katalysators sichergestellt.

Bei Temperaturen von 100 °C bis 160 °C erfolgt, im Falle fester Isocyanate, die Vernetzung in weniger als 10 Minuten, insbesondere innerhalb von 5 Minuten, in Abhängigkeit von der Art des verwendeten Isocyanates, der Reaktivität der Matrix und gegebenenfalls der Art und Menge des Katalysators. Eine schnelle und rasch belastbare Verklebung ist somit gewährleistet. Läßt man alternativ die Schmelze nach Initiierung des Vernetzungsprozesses wieder auf Raumtemperatur abkühlen, so vernetzt der reaktive Schmelzkleber des reaktiven Schmelzklebeelementes nach der Erfindung, im Falle der festen Isocyanate, innerhalb von 5 bis 8 Tagen.

Gegenstand der vorliegenden Erfindung ist somit auch ein Klebeverfahren zum dauerhaften Verbinden von Fügeteilen unter Verwendung des erfindungsgemäßen reaktiven Schmelzklebematerials.

Gemäß einer ersten Ausführungsform umfaßt das erfindungsgemäße Klebeverfahren zum dauerhaften Verbinden von Fügeteilen unter Verwendung des erfindungsgemäßen reaktiven Schmelzklebeelements insbesondere die folgenden Verfahrensschritte:
a) Bereitstellung eines ersten und eines zweiten Fügeteils und eines erfindungsgemäßen reaktiven Schmelzklebeelementes,
b) Aufbringung des erfindungsgemäßen reaktiven Schmelzklebeelementes auf das erste der beiden Fügeteile, insbesondere unter Erwärmen und/oder Druck, gegebenenfalls unter Aufschmelzen der reaktiven Bestandteile und dadurch Initiierung des Vernetzungsvorgangs,
c) Zusammenfügen des ersten und des zweiten Fügeteils unter Aufbringen des zweiten Fügeteils auf die mit dem reaktiven Schmelzklebeelement versehene Seite des ersten Fügeteils, vorzugsweise unter Druck,
d) Zusammenpressen der beiden Fügeteile und gegebenenfalls Initiierung des Vernetzungsvorgangs (sofern nicht bereits in Schritt b) erfolgt), insbesondere unter Wärme- und/oder Feuchtigkeitseinwirkung, und schließlich
e) Aushärtenlassen, gegebenenfalls unter Druck- und/oder Wärme- und/oder Feuchtigkeitseinwirkung.

Gemäß einer zweiten Ausführungsform umfaßt das erfindungsgemäße Klebeverfahren zum dauerhaften Verbinden von Fügeteilen unter Verwendung des erfindungsgemäßen reaktiven Schmelzklebeelements insbesondere die folgenden Verfahrensschritte:
a) Bereitstellung eines ersten und eines zweiten Fügeteils und eines erfindungsgemäßen reaktiven Schmelzklebeelementes,
b) Zusammenfügen des ersten und zweiten Fügeteils mit dem dazwischen angeordneten reaktiven Schmelzklebeelement,
c) Zusammenpressen der beiden in Schritt b) zusammengefügten Fügeteile, insbesondere unter Wärme- und gegebenenfalls Feuchtigkeitseinwirkung, vorzugsweise unter Aufschmelzen der reaktiven Bestandteile und dadurch Initiierung des Vernetzungsvorgangs, und schließlich
d) Aushärtenlassen, gegebenenfalls unter Druck- und/oder Wärme- und/oder Feuchtigkeitseinwirkung.

Die Wärmeeinwirkung kann beispielsweise durch eine Heizvorrichtung, durch Ultraschall, durch Hochfrequenz, durch Mikrowellenbestrahlung, durch Laserbestrahlung, durch Infrarotbestrahlung oder durch Aufheizen der Fügeteile erfolgen.

Wie zuvor beschrieben, kann es von Vorteil sein, wenn das erfindungsgemäße reaktive Schmelzklebeelement auch Additive zur Verbesserung der Wärmeleitfähigkeit und/oder der Empfindlichkeit für Strahlungsinduktion, insbesondere gegenüber Mikrowellen- und Hochfrequenzstrahlung, (z. B. Silberpulver oder Polyanilin) umfaßt, weil bei dem wärmeinduzierten Vernetzungsvorgang, insbesondere durch Mikrowellen- oder Hochfrequenzbestrahlung, der Energieeintrag besonders effizient ausgenutzt wird.

Insbesondere kann das erfindungsgemäße Klebeverfahren im automatisierten, vorzugsweise im kontinuierlichen Betrieb durchgeführt werden.

Beispielsweise lassen sich nach dem erfindungsgemäßen Klebeverfahren Fügeteile aus Holz, Kunststoff etc. verkleben. Beispiele sind Holzprofile, insbesondere Möbelteile.

So z. B. eignet sich das erfindungsgemäße Verfahren zum Anbringen von Kantenbändern an Holzprofile, wie z. B. insbesondere Möbelteile. Für die automatisierte Durchführung des erfindungsgemäßen Verfahrens für solche Anwendungen eignen sich Vorrichtungen, wie sie aus dem Stand der Technik bekannt sind.

Die vorliegende Erfindung wird anhand der folgenden Ausführungsbeispiele veranschaulicht, welche die vorliegende Erfindung jedoch keinesfalls beschränken.

### Beispiel 1:

### Herstellung eines erfindungsgemäßen reaktiven Schmelzklebeelementes ausgehend von bei Raumtemperatur festen Isocyanaten

In einem beheiz- und evakuierbaren Kessel werden 58 kg Hexandioladipat (Dynacoll® 7360, Degussa-Hüls AG) und 31 kg Kohlenwasserstoff-Harz (Novares® TM 80,VFT AG) vorgelegt und auf 140 °C erhitzt und homogen vermischt.

Anschließend gibt man bei 70 bis 90 °C 0,5 kg 2-Methylpentamethylendiamin (Dytek® A, Du Pont) hinzu. Nach weiteren 10 Minuten gibt man 10 kg dimeres 1-Methyl-2,4-phenylen-diisocyanat (Desmodur® TT, Bayer AG) hinzu. Nach jeweils homogener Vermischung gibt man 0,6 kg Pentaerythrit, 0,4 kg Diazabicyclooctan und 0,1 kg Bismutorganyl (Coscat 83, Fa. Erbslöh) hinzu, und anschließend wird das Ganze evakuiert und 30 Minuten gerührt.

Die Schmelze wird dann über eine Schlitzdüse auf ein Stahlband gefördert und nach Erkalten aufgerollt. Das resultierende, erfindungsgemäße reaktive Schmelzklebeelement hat folgende technischen Eigenschaften:

| | |
|---|---|
| Schmelzbereich (Kofler-Heizbank) | 60 bis 65°C |
| Viskosität (Brookfield, Sp 28, 50 UpM) 80 °C | ca. 4.500 mPas |
| Heißhärtung (100 µm Filmdicke, Kofler-Heizbank) | > 160°C: ca. 10 Sekunden |
| Zeit, bis Schmelze bei gegebener Temperatur erstarrt | 140°C: ca. 30 Sekunden |
| | 130 °C: ca. 2 Minuten |
| | 120 °C: ca. 3-4 Minuten |
| Stabilität der Viskosität bei 80 °C | >> 8 Stunden |

### Beispiel 2:

### Herstellung eines erfindungsgemäßen reaktiven Schmelzklebeelementes ausgehend von bei Raumtemperatur flüssigen Isocyanaten

Eine Mischung aus 200 Teilen eines Polyesterpolyols auf Basis von Pentaerythrit, Monoethylenglykol, Hexandiol und Hexandisäure mit einem Molekulargewicht von ca. 5.500 und einer OH-Zahl von ca. 20 (Dynacoll® 7250) und 100 Teile eines Polyesterpolyols auf Basis von Neopentylglykol, Monoethylenglykol, Isophthalsäure und Terephthalsäure mit einem Molekulargewicht von ca. 2.600 und einer OH-Zahl von ca. 42 (Dynacoll® 7150) und 200 Teile eines Polyesterpolyols auf Basis von Hexandiol und Adipinsäure mit einem Molekulargewicht von ca. 4.000 und einer OH-Zahl von ca. 28 (Dynacoll® 7360) und 200 Teile eines Polyesterpolyols auf Basis von Hexandiol und einer Mischung aus Terephthal-, Isophthal- und Sebacinsäure mit einem Molekulargewicht von ca. 25.000 und einer OH-Zahl von ca. 4,5 (Dynacoll® S 1401) und 200 Teile eines niedrigmolekularen Kunstharzes aus der Gruppe der α-Methylstyrolharze (Sylvarez® S 600) werden in einem geeigneten Rührgefäß vorgelegt und auf 140 °C erhitzt.

Nach dem Homogenisieren und Entwässern wird der Ansatz auf 100 bis 120 °C abgekühlt und 100 Teile des Isocyanates, bestehend aus einem Gemisch aus 4,4'-Diisocyanatodiphenylmethan und 2,4'-Diisocyanatodiphenylmethan, wobei der Anteil des 2,4'-Diisocyanatodiphenylmethans in dem Gemisch mehr als 50 Gew.-% beträgt (Desmodur® VP KA 8616 von der Bayer AG), unter Rühren zugegeben. Der Ansatz wird zwei Stunden lang auf 100 bis 120 °C gehalten. Der dabei entstehende reaktive Schmelzklebstoff hat einen Isocyanat-Gehalt von 2,1 bis 2,3 Gew.-%, eine Viskosität von ca. 25.000 bei 120 °C (Brookfield Thermosel) und einen Erweichungsbereich im nichtvernetzten Zustand von 55 bis 65 °C (Kofler Heizbank).

## Patentansprüche

1. Selbsttragendes reaktives Schmelzklebeelement, das einen bei Raumtemperatur festen, reaktiven Einkomponenten-Schmelzklebstoff umfaßt, wobei der bei Raumtemperatur feste, reaktive Einkomponenten-Schmelzklebstoff
(a) 0,5 bis 30 Gew.-%, bezogen auf das reaktive Schmelzklebeelement, mindestens eines bei Raumtemperatur festen oder flüssigen Isocyanats,
(b) 20 bis 90 Gew.-%, bezogen auf das reaktive Schmelzklebeelement, mindestens eines bei Raumtemperatur festen isocyanatreaktiven Polymers und/oder Harzes,
(c) bis zu 60 Gew.%, bezogen auf das reaktive Schmelzklebeelement eines nichtisocyanatreaktiven Polymers, Wachses und/oder Harzes
umfaßt, wobei die nichtisocyanatreaktiven Polymere, Wachse und/oder Harze (c) zusammen mit den isocyanatreaktiven Polymeren und/oder Harzen (b) eine Matrix ausbilden, in welche die Isocyanate (a) in homogener Verteilung eingelagert sind und wobei der Gehalt an freien NCO-Gruppen im reaktiven Schmelzklebeelement mindestens 0,5 Gew-%, bezogen auf das reaktive Schmelzklebeelement, beträgt.

2. Reaktives Scbmelzldebeelement nach Anspruch 1, **dadurch gekennzeichnet, daß** das Isocyanat ein aliphatisches und/oder aromatisches Di- und/oder Polyisocyanat, vorzugsweise mit freien endständigen NCO-Gruppen, ist, insbesondere wobei das Isocyanat ausgewählt sein kann aus der Gruppe von Diisocyanatodiphenylmethanen (MDIs), insbesondere 4,4'-Diisocyanatodiphenylmethan und 2,4'-Diisocyanatodiphenylmethan, sowie Mischungen verschiedener Diisocyanatodiphenylmethane; 1,5-Diisocyanatonaphthalin (NDI); Diisocyanatotoluolen (TDIs), insbesondere 2,4-Diisocyanatotoluol, sowie TDI-Urethdionen, insbesondere dimerem 1-Methyl-2,4-phenylen-diisocyanat (TDI-U), und TDI-Harnstof fen; 1-Isocyanato-3-isocyanatomethyl-3,5,5-trimethylcyclohexan (IPDI) und dessen Isomeren und Derivaten, insbesondere Di-, Tri- und Polymerisaten, sowie IPDI-Isocyanurat (IPDI-T); 3,3'-Dimethylbiphenyl-4,4'-diisocyanat (TODI); 3,3'-Diisocyanato-4,4'-dimethyl-N,N-diphenylharnstoff (TDIH); sowie Mischungen und Prepolymeren der zuvor genannten Verbindungen.

3. Reaktives Schmelzklebeelement nach einem der vorhergehenden Ansprüche, **dadurch gekennzeichnet, daß** der Gehalt an freien NCO-Gruppen im reaktiven Schmelzklebeelement mindestens 1 Gew.-%, insbesondere mindestens 1,5 Gew.-%, besonders bevorzugt mindestens 2 Gew.-%, beträgt, bezogen auf das reaktive Schmelzklebeelement.

4. Reaktives Schmelzklebeelement nach einem der vorhergehenden Ansprüche, **dadurch gekennzeichnet, daß** als Isocyanat ein Gemisch aus 4,4'-Diisocyanatodiphenylmethan und 2,4'-Diisocyanatodiphenylmethan verwendet wird, vorzugsweise mit einem Gehalt an 2,4'-Diisocyanatodiphenylmethan von mehr als 20 Gew.-%, insbesondere mehr als 30 Gew.-%, bevorzugt mehr als 40 Gew.-%, ganz besonders bevorzugt mehr als 50 Gew.-%, bezogen auf das Isocyanatgemisch.

5. Reaktives Schmelzklebeelement nach einem der vorhergehenden Ansprüche, **dadurch gekennzeichnet, daß** als Isocyanat ein maskiertes oder blockiertes Isocyanat verwendet wird, welches insbesondere unter Wärme- und/oder Feuchtigkeitseinwirkung die blockierenden oder maskierenden Gruppen abspaltet.

6. Reaktives Schmelzklebeelement nach einem der vorhergehenden Ansprüche, **dadurch gekennzeichnet, daß** als Isocyanat ein verkapseltes oder oberflächendesaktiviertes Isocyanat verwendet wird, insbesondere wobei die Verkapselung oder Oberflächendesaktivierung vorzugsweise bei Temperaturen oberhalb der Raumtemperatur aufgebrochen wird.

7. Reaktives Schmelzklebeelement nach einem der vorhergehenden Ansprüche, **dadurch gekennzeichnet, daß** das isocyanatreaktive Polymere und/oder Harz mindestens zwei gegenüber Isocyanaten reaktive Gruppen je Molekül, insbesondere zwei gegenüber Isocyanaten reaktive H-Atome je Molekül, aufweist, insbesondere Hydroxyl-, Amino-, Carboxyl- und/ oder Carbonamidgruppen.

8. Reaktives Schmelzklebeelement nach einem der vorhergehenden Ansprüche, **dadurch gekennzeichnet, daß** das isocyanatreaktive Polymer und/oder Harz ein mittleres Molekulargewicht von mehr als 8.000 g/mol, insbesondere von 10.000 bis 50.000 g/mol, vorzugsweise von 10.000 bis 30.000 g/mol, aufweist und/oder daß das isocyanatreaktive Polymer und/oder Harz ausgewählt ist aus der Gruppe von Polyestern, Polycaprolactonpolyestern, Polyethern, Polyurethanen, Polyamiden, Polytetrahydrofuranen, Polyacrylaten und Polymethacrylaten sowie deren Copolymeren und Mischungen, jeweils mit mindestens zwei isocyanatreaktiven funktionellen Gruppen pro Molekül, und/oder daß das isocyanatreaktive Polymer und/oder Harz sich von isocyanatreaktiven Polymeren und/oder Copolymeren ableitet.

9. Reaktives Schmelzklebeelement nach einem der vorhergehenden Ansprüche, **dadurch gekennzeichnet, daß** es außerdem mindestens einen Katalysator, vorzugsweise homogen über die Matrix aus isocyanatreaktiven Polymeren und/oder Harzen (b) und nichtisocyanatreaktiven Polymeren, Wachsen und/oder Harzen (c) verteilt und hierin eingebettet, enthält, insbesondere wobei der Katalysator ein in der Polyurethanchemie gängiger und bekannter Katalysatoren ist, insbesondere ausgewählt aus der Gruppe von organischen Zinnverbindungen wie Dibutylzinndilaurat (DBTL), Alkylmercaptidverbindungen des Dibutylzinns oder aber organischen Eisen-, Blei-, Cobalt-, Wismuth-, Antimon-, Zinkverbindungen und Mischungen der zuvor genannten Verbindungen sowie Katalysatoren auf Aminbasis wie tertiäre Amine, 1,4-Diazabicyclo[2.2.2]octan und Dimorpholinodiethylether sowie deren Mischungen, insbesondere wobei der Gehalt an Katalysator 0,01 bis 5 Gew.-%, bezogen auf das reaktive Schmelzklebeelement, beträgt.

10. Reaktives Schmelzklebeelement nach einem der vorhergehenden Ansprüche, **dadurch gekennzeichnet, daß** das nichtisocyanatreaktive Polymer, Wachs und/oder Harz ein aliphatisches, cyclisches oder cycloaliphatisches Kohlenwasserstoff-harz, ein Terpenphenolharz, ein Cumaron-Indenharz, ein α-Methylstyrolharz, ein polymerisierter Tallharzester oder ein Ketonaldehydharz ist und/oder daß das nichtisocyanatreaktive Polymer, Wachs und/oder Harz ein Harz mit niedriger Säurezahl, insbesondere mit Werten kleiner als 1 mg KOH/g, ist.

11. Reaktives Schmelzklebeelement nach einem der vorhergehenden Ansprüche, **dadurch gekennzeichnet, daß** das nichtisocyanatreaktive Polymer, Wachs und/oder Harz ausgewählt ist aus der Gruppe von (i) Ethylen/Vinylacetat-Polymeren oder -Copolymeren, insbesondere solchen mit Vinylacetat-Gehalten zwischen 12 und 40 Gew.-%, insbesondere 18 bis 28 Gew.-%, und/oder mit Schmelzindices (MFIs, DIN 53735) von 8 bis 800, insbesondere 150 bis 500; (ii) Polyolefinen, insbesondere mit mittleren Molekulargewichten von 5.000 bis 25.000 g/mol, vorzugsweise 10.000 bis 20.000 g/mol, und/oder mit Erweichungsbereichen nach Ring und Kugel zwischen 80 und 170 °C, vorzugsweise zwischen 80 und 130 °C; (iii) (Meth-)Acrylaten wie Styrol(meth)acrylaten sowie Mischungen dieser Verbindungen; und (iv) Polyolefinwachsen, insbesondere Polyethylen- und Polypropylenwachsen, sowie auf dieser Basis modifizierten Wachsen.

12. Reaktives Schmelzklebeelement nach einem der vorhergehenden Ansprüche, **dadurch gekennzeichnet, daß** es weiter mindestens ein isocyanatreaktives monofunktionelles Additiv enthält, insbesondere in Mengen von 0 bis 20 Gew.-%, bezogen auf das reaktive Schmelzklebeelement, insbesondere wobei das monofunktionelle Additiv aus der Gruppe von monofunktionellen Aminen, Alkoholen, Mercaptanen und anderen monofunktionellen Additiven mit isocyanatreaktiver funktioneller Gruppe ausgewählt sein kann.

13. Reaktives Schmelzklebeelement nach einem der vorhergehenden Ansprüche, **dadurch gekennzeichnet, daß** die einzelnen Bestandteile und Inhaltsstoffe ineinander eingebettet und homogen verteilt sind.

14. Reaktives Schmelzklebeelement nach einem der vorhergehenden Ansprüche, **dadurch gekennzeichnet, daß** es bei Raumtemperatur nichtklebend oder nichthaftend ist und daß es bei Temperaturen oberhalb der Raumtemperatur, insbesondere bei Temperaturen von 60 °C bis 160 °C, klebrig oder haftend wird, insbesondere wobei es nach kurzzeitigem Erwärmen oberhalb der Raumtemperatur, insbesondere auf Temperaturen von 60 °C bis 160 °C, zu vernetzen beginnt, wobei die Dauer der Vernetzung, insbesondere im Falle der festen Isocyanate, bei Temperaturen von 100 °C bis 160 °C im allgemeinen weniger als 10 Minuten, insbesondere weniger als 5 Minuten, beträgt.

15. Reaktives Schmelzklebeelement nach einem der vorhergehenden Ansprüche, **dadurch gekennzeichnet, daß** es wärme- und/oder feuchtigkeitsvernetzend ist.

16. Reaktives Schmelzklebeelement nach einem der vorhergehenden Ansprüche, **dadurch gekennzeichnet, daß** es eine Schichtdicke von 10 µm bis 1.000 µm, insbesondere 50 µm bis 500 µm, vorzugsweise 100 µm bis 300 µm, aufweist.

17. Reaktives Schmelzklebeelement nach einem der vorhergehenden Ansprüche, **dadurch gekennzeichnet, daß** es als Folie, Film, Streifen oder reaktives Klebeband ausgebildet ist und zu einer Rolle aufgewickelt sein kann, insbesondere wobei es in einer Kassette gelagert sein kann.

18. Reaktives Schmelzklebeelement nach einem der vorhergehenden Ansprüche, **dadurch gekennzeichnet, daß** es die folgenden Inhaltsstoffe enthält:
- Isocyanate in einer Menge von 0,5 bis 30 Gew.-%,
- isocyanatreaktive Polymere und/oder Harze in einer Menge von 20 bis 90 Gew.-%,
- isocyanatreaktive monofunktionelle Additive in einer Menge von 0 bis 20 Gew.-%,
- nichtisocyanatreaktive Polymere, Wachse und/oder Harze in einer Menge von bis zu 60 Gew.-%,
- gegebenenfalls Katalysatoren in einer Menge von bis zu 5 Gew.-%, insbesondere 0,01 bis 5 Gew.-%,
- gegebenenfalls Additive zur Verbesserung der Wärmeleitfähigkeit und/oder der Empfindlichkeit für Strahlungsinduktion in einer Menge von bis zu 25 Gew.-%, insbesondere 1 bis 25 Gew.-%, vorzugsweise 5 bis 20 Gew.-%,
jeweils bezogen auf das reaktive Schmelzklebeelement.

19. Verfahren zur Herstellung eines reaktiven Schmelzklebeelements nach den Ansprüchen 1 bis 18, **gekennzeichnet durch** die folgenden Verfahrensschritte:
- Mischen der einzelnen Bestandteile (Inhaltsstoffe), wie zuvor definiert, insbesondere unter leichtem Erwärmen, jedoch ohne daß im Falle der festen Isocyanate eine Reaktion der einzelnen Bestandteile (Inhaltsstoffe) untereinander stattfindet, insbesondere wobei das Mischen der einzelnen Bestandteile (Inhaltsstoffe) vorzugsweise in einem Mischer (Mischvorrichtung) oder einem Extruder erfolgt,
- gegebenenfalls Abkühlen- und/oder Erstarrenlassen der resultierenden Mischung,
- Verarbeitung der auf diese Weise hergestellten homogene Masse zu einem Film, gegebenenfalls unter leichtem Erwärmen oberhalb der Raumtemperatur, jedoch ohne daß eine Reaktion der einzelnen Bestandteile (Inhaltsstoffe) untereinander stattfindet,
- gegebenenfalls Abkühlenlassen des so erhaltenen Films auf Raumtemperatur und
- gegebenenfalls Weiterverarbeitung, insbesondere Dimensionierung und/oder Aufwickeln zu Rollen.

20. Klebeverfahren zum dauerhaften Verbinden von Fügeteilen unter Verwendung eines reaktiven Schmelzklebeelementes nach den Ansprüchen 1 bis 18, **gekennzeichnet durch** die folgenden Verfahrensschritte:
(a) Bereitstellung eines ersten und eines zweiten Fügeteils und eines reaktiven Schmelzklebeelementes nach den Ansprüchen 1 bis 18,
(b) Aufbringung des reaktiven Schmelzklebeelementes nach einem der Ansprüche 1 bis 18 auf das erste der beiden Fügeteile, insbesondere unter Erwärmen und/oder Druck, gegebenenfalls unter Aufschmelzen der reaktiven Bestandteile und **dadurch** Initiierung des Vernetzungsvorgangs,
(c) Zusammenfügen des ersten und des zweiten Fügeteils unter Aufbringen des zweiten Fügeteils auf die mit dem reaktiven Schmelzklebeelement versehene Seite des ersten Fügeteils, vorzugsweise unter Druck,
(d) Zusammenpressen der beiden Fügeteile und gegebenenfalls Initiierung des Vernetzungsvorgangs, insbesondere unter Wärme- und/oder Feuchtigkeitseinwirkung, und schließlich
(e) Aushärtenlassen, gegebenenfalls unter Druck- und/oder Wärme- und/oder Feuchtigkeitseinwirkung.

21. Klebeverfahren zum dauerhaften Verbinden von Fügeteilen unter Verwendung eines reaktiven Schmelzklebeelementes nach den Ansprüchen 1 bis 18, **gekennzeichnet durch** die folgenden Verfahrensschritte:
(a) Bereitstellung eines ersten und eines zweiten Fügeteils und eines reaktiven Schmelzklebeelementes nach den Ansprüchen 1 bis 18,
(b) Zusammenfügen des ersten und zweiten Fügeteils mit dem dazwischen angeordneten reaktiven Schmelzklebeelement nach einem der Ansprüche 1 bis 18,
(c) Zusammenpressen der beiden in Schritt (b) zusammengefügten Fügeteile, insbesondere unter Wärme- und gegebenenfalls Feuchtigkeitseinwirkung, vorzugsweise unter Aufschmelzen der reaktiven Bestandteile und **dadurch** Initiierung des Vernetzungsvorgangs, und schließlich
(d) Aushärtenlassen, gegebenenfalls unter Druck- und/oder Wärme- und/oder Feuchtigkeitseinwirkung.

22. Verfahren nach Anspruch 20 oder 21, **dadurch gekennzeichnet, daß** mindestens eines der Fügeteile aus Holz oder Kunststoff besteht.

23. Verfahren nach einem der Ansprüche 20 bis 22 zum Verkleben von Holzteilen, Kunststoffteilen oder Holz- und Kunststoffteilen, insbesondere Holzprofilen, vorzugsweise Möbelteilen, wie zum Anbringen von Kantenbändern an Holzprofile, insbesondere Möbelteile.

24. Verwendung eines reaktiven Schmelzklebeelementes nach den Ansprüchen 1 bis 18 in einem Klebeverfahren, insbesondere einem Schmelzklebeverfahren, vorzugsweise zum dauerhaften Zusammenfügen von Fügeteilen, insbesondere aus Holz und/oder Kunststoff.

## Claims

1. Self-supporting reactive hot-melt adhesive element comprising a reactive one-component hot-melt adhesive which is solid at room temperature,
where the reactive one-component hot-melt adhesive which is solid at room temperature comprises
(a) 0.5 % to 30 % by weight, based on the reactive hot-melt adhesive element, of at least one isocyanate which is solid or liquid at room temperature,
(b) 20 % to 90 % by weight, based on the reactive hot-melt adhesive element, of at least one isocyanate-reactive polymer and/or resin which is solid at room temperature,
(c) up to 60 % by weight, based on the reactive hot-melt adhesive element, of a non-isocyanate-reactive polymer, wax and/or resin,
where the non-isocyanate-reactive polymers, waxes and/or resins (c) together with the isocyanate-reactive polymers and/or resins (b) form a matrix in which the isocyanates are incorporated in homogeneous distribution, and where the free NCO groups content of the reactive hot-melt adhesive element is at least 0.5 % by weight, based on the reactive hot-melt adhesive element.

2. Reactive hot-melt adhesive element according to Claim 1, **characterized in that** the isocyanate is an aliphatic and/or aromatic di- and/or polyisocyanate, preferably having free terminal NCO groups, the isocyanate being selectable in particular from the group consisting of diisocyanatodiphenylmethane (MDIs), especially 4,4'-diisocyanatodiphenylmethane and 2,4'-diisocyanatodiphenylmethane, and also mixtures of different diisocyanatodiphenylmethanes; 1,5-diisocyanatonaphthalene (NDI); diisocyanatotoluenes (TDIs), especially 2,4-diisocyanatotoluene, and also TDI urethdiones, especially dimeric 1-methyl-2,4-phenylene diisocyanate (TDI-U), and TDI ureas; 1-isocyanato 3-isocyanatomethyl 3,5,5-trimethylcyclohexane (IPDI) and its isomers and derivatives, especially di-, tri- and polymerisates, as well as IPDI isocyanurate (IPDI-T); 3,3'-dimethylbiphenyl 4,4'-diisocyanate (TODI); 3,3'-diisocyanato-4,4'-dimethyl-N,N'-diphenylurea (TDIH); and also mixtures and prepolymers of the aforementioned compounds.

3. Reactive hot-melt adhesive element according to either of the preceding claims, **characterized in that** the free NCO groups content of the reactive hot-melt adhesive element is at least 1 % by weight, in particular at least 1.5 % by weight, more preferably at least 2 % by weight, based on the reactive hot-melt adhesive element.

4. Reactive hot-melt adhesive element according to any one of the preceding claims, **characterized in that** as isocyanate a mixture of 4,4'-diisocyanatodiphenylmethane and 2,4'-diisocyanatodiphenylmethane is used, preferably having a 2,4'-diisocyanatodiphenylmethane content of more than 20 % by weight, in particular more than 30 % by weight, preferably more than 40 % by weight, very preferably more than 50 % by weight, based on the isocyanate mixture.

5. Reactive hot-melt adhesive element according to any one of the preceding claims, **characterized in that** as isocyanate a masked or blocked isocyanate is used which eliminates the blocking or masking groups in particular under exposure to heat and/or moisture.

6. Reactive hot-melt adhesive element according to any one of the preceding claims, **characterized in that** as isocyanate an encapsulated or surface-deactivated isocyanate is used, the encapsulation or surface deactivation being preferably broken up at temperatures exceeding room temperature.

7. Reactive hot-melt adhesive element according to any one of the preceding claims, **characterized in that** the isocyanate-reactive polymer and/or resin has at least two isocyanate-reactive groups per molecule, in particular two isocyanate-reactive hydrogen atoms per molecule, especially hydroxyl, amino, carboxyl and/or carboxamide groups.

8. Reactive hot-melt adhesive element according to any one of the preceding claims, **characterized in that** the isocyanate-reactive polymer and/or resin has an average molecular weight of more than 8000 g/mol, in particular of 10,000 to 50,000 g/mol, preferably of 10,000 to 30,000 g/mol, and/or **in that** the isocyanate-reactive polymer and/or resin is selected from the group consisting of polyesters, polycaprolactone-polyesters, polyethers, polyureathanes, polyamides, polytetrahydrofurans, polyacrylates and polymethacrylates and also copolymers and mixtures thereof, in each case having at least two isocyanate-reactive functional groups per molecule, and/or **in that** the isocyanate-reactive polymer and/or resin is derived from isocyanate-reactive polymers and/or copolymers.

9. Reactive hot-melt adhesive element according to any one of the preceding claims, **characterized in that** it further comprises at least one catalyst, preferably distributed homogeneously over the matrix of isocyanate-reactive polymers and/or resins (b) and non-isocyanate-reactive polymers, waxes and/or resins (c) and embedded therein, the catalyst being in particular a catalyst common and known in polyurethane chemistry and selected in particular from the group consisting of organic tin compounds such as dibutyltin dilaurate (DBTL), alkyl mercaptide compounds of dibutyltin or else organic iron, lead, cobalt, bismuth, antimony and zinc compounds and mixtures of the aforementioned compounds and also amine-based catalysts such as tertiary amines, 1,4-diazabicyclo[2.2.2]octane and dimorpholinodiethyl ether and also mixtures thereof, the catalyst content being in particular 0.01 % to 5 % by weight, based on the reactive hot-melt adhesive element.

10. Reactive hot-melt adhesive element according to any one of the preceding claims, **characterized in that** the non-isocyanate-reactive polymer, wax and/or resin is an aliphatic, cyclic or cycloaliphatic hydrocarbon resin, a terpene-phenol resin, a coumarone-indene resin, an α-methylstyrene resin, a polymerized tall resin ester or a ketone-aldehyde resin and/or **in that** the non-isocyanate-reactive polymer, wax and/or resin is a resin having a low acid number, in particular with values less than 1 mg KOH/g.

11. Reactive hot-melt adhesive element according to any one of the preceding claims, **characterized in that** the non-isocyanate-reactive polymer, wax and/or resin is selected from the group consisting of (i) ethylene/vinyl acetate polymers or copolymers, especially those having vinyl acetate contents of between 12 % and 40 % by weight, in particular 18 % to 28 % by weight, and/or having melt indices (MFIs, DIN 53735) of 8 to 800, in particular 150 to 500; (ii) polyolefins, in particular having average molecular weights of 5000 to 25,000 g/mol, preferably 10,000 to 20,000 g/mol, and/or having ring and ball softening ranges between 80 and 170°C, preferably between 80 and 130°C; (iii) (meth)acrylates such as styrene (meth)acrylates and also mixtures of these compounds; and (iv) polyolefin waxes, especially polyethylene and polypropylene waxes, and also waxes modified on this basis.

12. Reactive hot-melt adhesive element according to any one of the preceding claims, **characterized in that** it further comprises at least one isocyanate-reactive monofunctional additive, in particular in amounts of 0 % to 20 % by weight, based on the reactive hot-melt adhesive element, in particular where the monofunctional additive can be selected from the group consisting of monofunctional amines, alcohols, mercaptans and other monofunctional additives having an isocyanate-reactive functional group.

13. Reactive hot-melt adhesive element according to any one of the preceding claims, **characterized in that** the individual constituents and ingredients are embedded and homogeneously distributed in one another.

14. Reactive hot-melt adhesive element according to any one of the preceding claims, **characterized in that** it is non-adhesive or non-tacky at room temperature and **in that** it becomes adhesive or tacky at temperatures above room temperature, in particular at temperatures of 60 °C to 160 °C, and in particular begins to crosslink following brief heating above room temperature, in particular to temperatures of 60 °C to 160 °C, the duration of crosslinking, particularly in the case of solid isocyanates, at temperatures of 100 °C to 160 °C being generally less than 10 minutes, in particular less than 5 minutes.

15. Reactive hot-melt adhesive element according to any one of the preceding claims, **characterized in that** it is heat- and/or moisture-crosslinking.

16. Reactive hot-melt adhesive element according to any one of the preceding claims, **characterized in that** it has a layer thickness of 10 µm to 1000 µm, in particular 50 µm to 500 µm, preferably 100 µm to 300 µm.

17. Reactive hot-melt adhesive element according to any one of the preceding claims, **characterized in that** it is in the form of a sheet, film, strip or reactive adhesive tape and may have been wound into a roll, and in particular may be stored in a cassette.

18. Reactive hot-melt adhesive element according to any one of the preceding claims, **characterized in that** it comprises the following ingredients:
- isocyanates in an amount of 0.5 % to 30 % by weight,
- isocyanate-reactive polymers and/or resins in an amount of 20 % to 90 % by weight,
- isocyanate-reactive monofunctional additives in an amount of 0 % to 20 % by weight,
- non-isocyanate-reactive polymers, waxes and/or resins in an amount of up to 60 % by weight,
- optionally catalysts in an amount of up to 5 % by weight, in particular 0.01 % to 5 % by weight,
- optionally additives for improving the thermal conductivity and/or the sensitivity to radiation induction in an amount of up to 25 % by weight, in particular 1 % to 25 % by weight, preferably 5 % to 20 % by weight,
based in each case on the reactive hot-melt adhesive element.

19. Process for producing a reactive hot-melt adhesive element according to Claims 1 to 18, **characterized by** the following steps:
- mixing the individual constituents (ingredients), as defined above, in particular with gentle heating, but without reaction of the individual constituents (ingredients) with one another taking place in the case of the solid isocyanates, the mixing of the individual constituents (ingredients) taking place preferably in a mixer (mixing apparatus) or an extruder,
- optionally allowing the resulting mixture to cool and/or solidify,
- processing the homogeneous composition prepared in this way to a film, optionally with gentle heating above room temperature, but without reaction of the individual constituents (ingredients) with one another taking place,
- optionally leaving the resulting film to cool to room temperature, and
- optionally further processing, in particular dimensioning and/or winding into rolls.

20. Adhesive bonding process for permanently connecting adherends, using a reactive hot-melt adhesive element according to Claims 1 to 18, **characterized by** the following steps:
(a) providing a first and a second adherend and a reactive hot-melt adhesive element according to Claims 1 to 18,
(b) applying the reactive hot-melt adhesive element according to any one of Claims 1 to 18 to the first of the two adherends, in particular with heating and/or under pressure, optionally with melting of the reactive constituents and, consequently, initiation of the crosslinking process,
(c) joining the first and the second adherend, with application of the second adherend to the side of the first adherend that has been provided with the reactive hot-melt adhesive element, preferably under pressure,
(d) pressing the two adherends together and optionally initiating the crosslinking process, in particular with exposure to heat and/or moisture, and finally
(e) curing the bond, optionally with exposure to pressure and/or heat and/or moisture.

21. Adhesive bonding process for permanently connecting adherends, using a reactive hot-melt adhesive element according to Claims 1 to 18, **characterized by** the following steps:
(a) providing a first and a second adherend and a reactive hot-melt adhesive element according to Claims 1 to 18,
(b) joining the first and second adherend with the reactive hot-melt adhesive element according to any one of Claims 1 to 18 arranged between them,
(c) pressing the two adherends joined during the step (b) together, in particular with exposure to heat and optionally moisture, preferably with melting of the reactive constituents and, consequently, initiation of the crosslinking process, and finally
(d) curing the bond, optionally with exposure to pressure and/or heat and/or moisture.

22. Process according to Claim 20 or 21, **characterized in that** at least one of the adherends is of wood or plastic.

23. Process according to any one of Claims 20 to 22 for adhesively bonding wood parts, plastic parts or wood parts and plastic parts, especially wood profiles, preferably furniture parts, such as for attaching edge strips to wood profiles, especially furniture parts.

24. Use of a reactive hot-melt adhesive element according to Claims 1 to 18 in an adhesive bonding process, in particular a hot-melt adhesive bonding process, preferably for the permanent joining of adherends, particularly adherends made of wood and/or plastic.

## Revendications

1. Elément adhésif fusible réactif autoporteur, comprenant un adhésif fusible monocomposant réactif, solide à la température ambiante, l'adhésif fusible monocomposant réactif, solide à la température ambiante comprenant
(a) 0,5 à 30 % en poids, par rapport à l'élément adhésif fusible réactif, d'au moins un isocyanate solide ou liquide à la température ambiante,
(b) 20 à 90 % en poids, par rapport à l'élément adhésif fusible réactif, d'au moins un polymère réactif avec un isocyanate et/ou une résine réactive avec un isocyanate, solide à la température ambiante,
(c) jusqu'à 60 % en poids, par rapport à l'élément adhésif fusible réactif, d'un polymère, d'une cire et/ou d'une résine, non réactifs avec un isocyanate,
les polymères, cires et/ou résines (c) non réactifs avec un isocyanate formant, conjointement avec les polymères et/ou résines (b) réactifs avec un isocyanate, une matrice dans laquelle les isocyanates (a) sont incorporés en répartition homogène et la teneur en groupes NCO libres de l'élément adhésif fusible réactif étant d'au moins 0,5 % en poids, par rapport à l'élément adhésif fusible réactif.

2. Elément adhésif fusible réactif selon la revendication 1, **caractérisé en ce que** l'isocyanate est un di- et/ou polyisocyanate aliphatique et/ou aromatique, de préférence à groupes NCO libres en bout de chaîne, l'isocyanate pouvant être choisi en particulier dans le groupe des diisocyanatodiphénylméthanes (MDI), en particulier le 4,4'-diisocyanatodiphénylméthane et le 2,4'-diisocyanatodiphénylméthane, ainsi que des mélanges de divers diisocyanatodiphénylméthanes; le 1,5-diisocyanatonaphtalène (NDI); des diisocyanato-toluènes (TDI), en particulier le 2,4-diisocyanatotoluène, ainsi que des TDI-uretdiones, en particulier le 1-méthyl-2,4-phénylène-diisocyanate dimère (TDI-U) et des TDI-urées; 1-isocyanato-3-isocyanatométhyl-3,5,5-triméthylcyclohexane (IPDI) et ses isomères et dérivés, particulièrement di-, tri- et polymérisats, ainsi que l'IPDI-isocyanurate (IPDI-T); 3,3'-diméthylbiphényl-4,4'-diisocyanate (TODI); le 3,3'-diisocyanato-4,4'-diméthyl-N,N'-diphénylurée (TDIH); ainsi que de mélanges et prépolymères des composés précités.

3. Elément adhésif fusible réactif selon l'une quelconque des revendications précédentes, **caractérisé en ce que** la teneur en groupes NCO libres de l'élément adhésif fusible réactif est d'au moins 1 % en poids, en particulier d'au moins 1,5 % en poids, de façon particulièrement préférée d'au moins 2 % en poids, par rapport à l'élément adhésif fusible réactif.

4. Elément adhésif fusible réactif selon l'une quelconque des revendications précédentes, **caractérisé en ce qu'**on utilise en tant qu'isocyanate un mélange de 4,4'-diisocyanatodiphénylméthane et 2,4'-diisocyanatodiphénylméthane, de préférence ayant une teneur en 2,4'-diisocyanatodiphénylméthane de plus de 20 % en poids, en particulier de plus de 30 % en poids, de façon particulièrement préférée de plus de 40 % en poids, de façon tout particulièrement préférée de plus de 50 % en poids, par rapport au mélange d'isocyanates.

5. Elément adhésif fusible réactif selon l'une quelconque des revendications précédentes, **caractérisé en ce qu'**on utilise en tant qu'isocyanate un isocyanate masqué ou bloqué, dont les groupes bloquants ou masquants sont éliminés en particulier sous l'effet de la chaleur et/ou de l'humidité.

6. Elément adhésif fusible réactif selon l'une quelconque des revendications précédentes, **caractérisé en ce qu'**on utilise en tant qu'isocyanate un isocyanate encapsulé ou inactivé en surface, l'encapsulation ou l'inactivation superficielle étant de préférence rompue à des températures supérieures à la température ambiante.

7. Elément adhésif fusible réactif selon l'une quelconque des revendications précédentes, **caractérisé en ce que** le polymère réactif avec un isocyanate et/ou la résine réactive avec un isocyanate comporte(nt) par molécule au moins deux groupes réactifs vis-à-vis d'isocyanates, en particulier deux atomes d'hydrogène réactifs vis-à-vis d'isocyanates par molécule, en particulier des groupes hydroxy, amino, carboxy et/ou carbamoyle.

8. Elément adhésif fusible réactif selon l'une quelconque des revendications précédentes, **caractérisé en ce que** le polymère réactif avec un isocyanate et/ou la résine réactive avec un isocyanate présente(nt) une masse moléculaire moyenne de plus de 8.000 g/mole, en particulier de 10.000 à 50.000 g/mole, de préférence de 10.000 à 30.000 g/mole, et/ou **en ce que** le polymère réactif avec un isocyanate et/ou la résine réactive avec un isocyanate est(sont) choisi(e)(s) dans le groupe des polyesters, polycaprolactone-polyesters, polyéthers, polyuréthannes, polyamides, polytétrahydrofurannes, polyacrylates et polyméthacrylates, ainsi que de leurs copolymères et mélanges, comportant chacun par molécule au moins deux groupes fonctionnels réactifs avec des isocyanates, et/ou **en ce que** le polymère réactif avec un isocyanate et/ou la résine réactive avec un isocyanate dérive(nt) de polymères et/ou copolymères réactifs avec des isocyanates.

9. Elément adhésif fusible réactif selon l'une quelconque des revendications précédentes, **caractérisé en ce qu'**en outre il contient au moins un catalyseur, de préférence réparti de façon homogène sur la matrice à base de polymères et/ou de résines (b) réactifs avec des isocyanates et de polymères, cires et/ou résines (c) non réactifs avec des isocyanates, et incorporé dans celle-ci, en particulier le catalyseur étant l'un des catalyseurs connus et courants dans la chimie des polyuréthannes, en particulier choisi dans le groupe des composés organostanniques tels que le dilaurate de dibutylétain (DBTL), des composés alkylmercaptide du dibutylétain ou bien des composés organiques du fer, du plomb, du cobalt, du bismuth, de l'antimoine, du zinc et des mélanges des composés précités, ainsi que des catalyseurs à base d'amines, telles que des amines tertiaires, le 1,4-diazabicyclo[2.2.2]octane et le dimorpholinodiéthyléther ainsi que des mélanges de ceux-ci, la teneur en catalyseur allant en particulier de 0,01 à 5 % en poids, par rapport à l'élément adhésif fusible réactif.

10. Elément adhésif fusible réactif selon l'une quelconque des revendications précédentes, **caractérisé en ce que** le polymère non réactif avec un isocyanate, la cire non réactive avec un isocyanate et/ou la résine non réactive avec un isocyanate consistent en une résine hydrocarboné aliphatique, cyclique ou cycloaliphatique, une résine terpène-phénol, une résine coumarone-indène, une résine α-méthylstyrène, un ester résineux ester de résine d'huile de pin polymérisé ou une résine cétone-aldéhyde, et/ou **en ce que** le polymère non réactif avec un isocyanate, la cire non réactive avec un isocyanate et/ou la résine non réactive avec un isocyanate consistent en une résine à faible indice d'acide, en particulier à indices inférieurs à 1 mg de KOH/g.

11. Elément adhésif fusible réactif selon l'une quelconque des revendications précédentes, **caractérisé en ce que** le polymère non réactif avec un isocyanate, la cire non réactive avec un isocyanate et/ou la résine non réactive avec un isocyanate est(sont) choisi(e)(s) dans le groupe constitué par (i) des polymères ou copolymères éthylène/acétate de vinyle, en particulier ceux à teneurs en acétate de vinyle comprises entre 12 et 40 % en poids, en particulier 18 à 28 % en poids et/ou à indices de fluidité à chaud (MFI, DIN 53735) de 8 à 800, en particulier de 150 à 500; (ii) des polyoléfines, en particulier à masses moléculaires moyennes de 5 000 à 25 000 g/mole, de préférence de 10 000 à 20 000 g/mole et/ou à plages de ramollissement, déterminées selon la méthode anneau et bille, comprise entre 80 et 170 °C, de préférence entre 80 et 130 °C; (iii) des (méth)acrylates tels que des styrène-(méth)acrylates ainsi que des mélanges de ces composés; et (iv) des cires polyoléfiniques, en particulier des cires polyéthyléniques et polypropyléniques, et des cires ainsi modifiées.

12. Elément adhésif fusible réactif selon l'une quelconque des revendications précédentes, **caractérisé en ce qu'**en outre il contient au moins un additif monofonctionnel réactif avec un isocyanate, en particulier en quantités de 0 à 20 % en poids, par rapport à l'élément adhésif fusible réactif, l'additif monofonctionnel pouvant être choisi dans le groupe des amines monofonctionnelles et des alcools et mercaptans monofonctionnels et d'autres additifs monofonctionnels à groupe fonctionnel réactif avec un isocyanate.

13. Elément adhésif fusible réactif selon l'une quelconque des revendications précédentes, **caractérisé en ce que** les composants individuels et substances contenues individuelles sont incorporés et répartis de façon homogène les uns dans les autres.

14. Elément adhésif fusible réactif selon l'une quelconque des revendications précédentes, **caractérisé en ce qu'**il est non collant ou non adhérent à la température ambiante et **en ce qu'**il est collant ou adhérent à des températures supérieures à la température ambiante, en particulier à des températures de 60 °C à 160 °C, en particulier, après un court chauffage au-dessus de la température ambiante, notamment à des températures de 60 °C à 160 °C, ce dernier commençant à se réticuler, la durée de la réticulation, en particulier dans le cas des isocyanates solides, étant en général inférieure à 10 minutes, en particulier inférieure à 5 minutes, à des températures de 100 °C à 160 °C.

15. Elément adhésif fusible réactif selon l'une quelconque des revendications précédentes, **caractérisé en ce qu'**il est réticulable à la chaleur et/ou à l'humidité.

16. Elément adhésif fusible réactif selon l'une quelconque des revendications précédentes, **caractérisé en ce qu'**il présente une épaisseur de couche de 10 µm à 1 000 µm, en particulier de 50 µm à 500 µm, de préférence de 100 µm à 300 µm.

17. Elément adhésif fusible réactif selon l'une quelconque des revendications précédentes, **caractérisé en ce qu'**il se présente sous forme d'une feuille, d'un film, d'une bande ou d'un ruban adhésif réactif et peut être enroulé en un rouleau, en pouvant en particulier être placé dans une cassette.

18. Elément adhésif fusible réactif selon l'une quelconque des revendications précédentes, **caractérisé en ce qu'**il contient les composants suivants :
- des isocyanates en une quantité de 0,5 à 30 % en poids,
- des polymères réactifs avec des isocyanates et/ou des résines réactives avec des isocyanates, en une quantité de 20 à 90 % en poids,
- des additifs monofonctionnels réactifs avec des isocyanates, en une quantité de 0 à 20 % en poids,
- des polymères, cires et/ou résines non réactifs avec des isocyanates, en une quantité allant jusqu'à 60 % en poids,
- éventuellement des catalyseurs en une quantité allant jusqu'à 5 % en poids, en particulier de 0,01 à 5 % en poids,
- éventuellement des additifs pour l'amélioration de la conductivité thermique et/ou de la sensibilité à l'induction par rayonnement, en une quantité allant jusqu'à 25 % en poids, en particulier de 1 à 25 % en poids, de préférence de 5 à 20 % en poids,
chaque fois par rapport à l'élément adhésif fusible réactif.

19. Procédé pour la préparation d'un élément adhésif fusible réactif selon les revendications 1 à 18, **caractérisé par** les étapes suivantes de processus :
- mélange des composants (substances contenues) individuels, comme défini précédemment, en particulier avec un léger chauffage, mais sans que, dans le cas des isocyanates solides, ait lieu une réaction des composants (substances contenues) individuels les uns avec les autres, en particulier le mélange des composants (substances contenues) individuels s'effectuant de préférence dans un mélangeur (dispositif de mélange) ou dans une extrudeuse,
- éventuellement refroidissement et/ou solidification du mélange résultant,
- transformation de la masse homogène, obtenue de cette façon, en un film, éventuellement avec un léger chauffage au-dessus de la température ambiante, mais sans qu'ait lieu une réaction des composants (substances contenues) individuels les uns avec les autres,
- éventuellement refroidissement du film ainsi obtenu, jusqu'à la température ambiante, et
- éventuellement transformation ultérieure, en particulier dimensionnement et/ou enroulement en rouleaux.

20. Procédé de collage pour l'assemblage durable de pièces à joindre avec utilisation d'un élément adhésif fusible réactif selon les revendications 1 à 18, **caractérisé par** les étapes suivantes de processus :
(a) fourniture d'une première pièce à joindre et d'une seconde et d'un élément adhésif fusible réactif selon les revendications 1 à 18,
(b) application de l'élément adhésif fusible réactif selon l'une quelconque des revendications 1 à 18, sur la première des deux pièces à joindre, en particulier sous l'effet de chaleur et/ou de pression, éventuellement avec fusion des composants réactifs et ainsi amorçage du processus de réticulation,
(c) réunion de la première pièce à joindre et de la seconde, avec application de la seconde pièce à joindre sur la face de la première pièce à joindre qui est munie de l'élément adhésif fusible réactif, de préférence sous pression,
(d) pression l'une contre l'autre des deux pièces à joindre et éventuellement amorçage du processus de réticulation, en particulier sous l'effet de la chaleur et/ou de l'humidité, et enfin
(e) durcissement, éventuellement sous l'effet de la pression et/ou de la chaleur et/ou de l'humidité.

21. Procédé de collage pour l'assemblage durable de pièces à joindre avec utilisation d'un élément adhésif fusible réactif selon les revendications 1 à 18, **caractérisé par** les étapes suivantes de processus :
(a) production d'une première pièce à joindre et d'une seconde et d'un élément adhésif fusible réactif selon les revendications 1 à 18,
(b) réunion de la première pièce à joindre et de la seconde avec l'élément adhésif fusible réactif disposé entre les pièces à joindre selon l'une quelconque des revendications 1 à 18, placé entre celles-ci,
(c) pression l'une contre l'autre des deux pièces à joindre réunies dans l'étape (b), en particulier sous l'effet de la chaleur et éventuellement de l'humidité, de préférence avec fusion des composants réactifs et ainsi amorçage du processus de réticulation, et enfin
(d) durcissement, éventuellement sous l'effet de la pression et/ou de la chaleur et/ou de l'humidité.

22. Procédé selon la revendication 20 ou 21, **caractérisé en ce qu'**au moins l'une des pièces à joindre est constituée de bois ou de matière plastique.

23. Procédé selon l'une quelconque des revendications 20 à 22, pour le collage de pièces en bois, de pièces en matière plastique ou de pièces en bois et en matière plastique, en particulier de profilés en bois, de préférence de pièces de meubles, comme pour l'application d'alaises de chants sur des profilés en bois, en particulier des pièces de meubles.

24. Utilisation d'un élément adhésif fusible réactif selon les revendications 1 à 18, dans un procédé de collage, en particulier un procédé de collage par fusion, de préférence pour l'assemblage durable de pièces à joindre, en particulier en bois et/ou en matière plastique.
